# NEW EUROPEAN PATENT SPECIFICATION

(11) **EP 0 482 535 B2**
(45) Date of publication and mention of the opposition decision: **10.07.2002**
(45) Mention of the grant of the patent: 26.07.1995
(21) Application number: 91117860.6
(22) Date of filing: 19.10.1991
(51) Int. Cl.: C03C 3/087, C03C 1/10, C03C 4/02, C03C 4/08

(54) **Dark gray, infrared absorbing glass composition and product**
Dunkelgraue, infrarot-absorbierende Glaszusammensetzung und Produkt
Composition de verre gris foncé qui absorbe les radiations infrarouges et produit

(30) Priority: 25.10.1990 US 603599
(43) Date of publication of application: 29.04.1992
(73) Proprietor: PPG Industries Ohio, Inc., Cleveland, OH 44111 (US)
(72) Inventor: Longobardo, Anthony Vincent, Pittsburgh, Pa. 15239 (US); Krumwiede, John Franklin, Cheswick, Pa. 15024 (US); Gulotta, Josepf Anthony, New Kensington, Pa. 15068 (US)
(74) Representative: Sternagel, Hans-Günther, Dr.

(56) References cited:
- EP-A- 0 452 207
- FR-A- 2 270 215
- US-A- 4 104 076
- US-A- 4 336 303
- PATENT ABSTRACTS OF JAPAN vol. 6, no. 197 (C-128)(1075) 6 October 1982

## Description

This invention involves a dark, neutral gray colored glass that has low luminous transmittance, particularly low infrared transmittance, and low total solar energy transmittance. Although not limited to a particular use, the glass of this invention exhibits a combination of properties that make it highly desirable for use for privacy glazing such as in the rear portions of vehicles such as vans. These properties include low visible light transmittance to reduce visibility of the contents of the vehicle, low infrared and total solar energy transmittance to reduce heat gain in the interior of the enclosure, a neutral gray color for the sake of coordinating with a wide range of interior and exterior finish colors, and a composition compatible with flat glass manufacturing methods. The glass of the present invention is particularly useful as a substrate for reflective coatings for privacy glazing applications. Therefore, another aspect of the invention is the product comprising the glass of the invention coated with a reflective coating.

A typical prior art dark gray glass composition is the following:

| | |
|---|---|
| SiO₂ | 72.90% by weight |
| Na₂O | 13.70 |
| K₂O | 0.03 |
| CaO | 8.95 |
| MgO | 3.90 |
| Al₂O₃ | 0.10 |
| SO₃ | 0.27 |
| Fe₂O₃ | 0.060 |
| CoO | 0.015 |
| NiO | 0.095 |

Infrared absorption of this type of glass is not as low as would be desired for the purposes of the present invention. Furthermore, inclusion of nickel is undesirable because the presence of nickel during the melting process sometimes leads to the formation of nickel sulfide stones in the glass. Although the nickel sulfide stones are nearly invisible and cause no harm to the glass under normal conditions, the high coefficient of thermal expansion of nickel sulfide can cause thermally induced stresses sufficient to fracture a glass sheet having a nickel sulfide stone.

Another nickel-containing gray glass composition is disclosed in U.S. Reissue Patent No. 25,312 (Duncan et al.). The luminous (visible) transmittances for the examples in that patent are higher than desired for privacy glazing.

Other prior art gray glasses containing iron oxide, cobalt oxide, and selenium (without nickel) are disclosed in U S -A-3,723,142 (Kato et al.) and GB-B-1,331,492 (Bamford). In both of these patents the glass is more transparent than is considered suitable for the privacy glazing type of application to which the present invention is directed.

Another attempt at nickel-free gray glass is disclosed in U S -A- 4,104,076 (Pons) where, instead of nickel, Cr₂O₃ orUO₂ are required in combination with iron oxide, cobalt oxide, and selenium. Although broad ranges for the coloring agents are disclosed in that patent, all of the examples have colorant concentrations that would not produce the particular combination of properties desired here. In particular, the teachings of that patent are not directed to production of dark gray glass for privacy glazing.

U S -A- 3,300,323 (Plumat et al.) also involves an attempt to produce gray glass without nickel. Instead of nickel, this patent's approach requires the inclusion of TiO₂ and optionally MnO₂, both of which are preferably avoided for commercial production by the float process. Additionally, the objective of the patent is to produce relatively high transmittance glass that would not be suitable for privacy glazing.

Glasses having a color described as "rose-smoke" are produced by the teachings of U S -A- 2,524,719 (Tillyer) and 2,892,726 (Smith et al.) using iron, cobalt, and selenium as the coloring agents. These glasses not neutral gray, which is a requirement of the pregent invention for the sake of color coordination with a variety of vehicle colors and for the sake of avoiding undue color distortion of the view out of the vehicle. Additionally, these patents are directed to producing small quantities of glass for ophthalmic uses, not for mass production of flat glass.

The combination of iron, cobalt, and selenium is disclosed as the coloring agent for making bronze colored glass in U S -A-3,296,004 (Duncan).

U S -A- 4,792,536 (Pecoraro et al.) discloses a relatively colorless, clear glass in which redox conditions are controlled to provide enhanced amounts of iron in the ferrous state for the sake of improving infrared absorption. FR-A-2,270,215 relates to an ultraviolet and infrared absorbing glass which is useful for protecting the eyes. The glass composition is based on alkali silicate and additionally comprises 0.2 to 4.0 % by weight Fe₃O₄, 0 to 0.9 % by weight Na₂SeO₃, 0 to 0.05 % by weight Co₂O₃, 0 to 0.5 % by weight Ni₂O₃, 2 to 6 % by weight NaCl, and 0.2 to 5.0 % by weight KNO₃.

From US-A-4,873,206 a neutral ,dark gray nickel-free soda-lime glass is known. The colorant portion consisting of 0.6 to 1.0 wt.% Fe₂O₃ (total iron), 0.09 to 0.3 wt.% iron in the ferrous state (FeO), CoO from 0.005 to 0.2 wt.% and Se from 0.003 to 0.02 wt.%. The glass has a luminous transmittance less than 20 % at a thickness of 5.56 mm, a dominant wavelength from 415 to 595 nm. The infrared transmission is greater than 25%.

EP-A-452,207 which is a reference within the meaning of Art. 54(3) EPC discloses a colored glass composition containing 64 to 75 % SiO₂, 0 to 5 % Al₂O₃, 0 to 5 % B₂O₃, 5 to 15 % CaO, 0 to 5 % MgO, 10 to 18 % Na₂O, 0 to 5 % K₂O, 1.4 to 4 % Fe₂O₃ (total iron), and 0 to 0.05 % CoO.

It would be desirable to be able to make a dark, neutral gray glass with low transmittance, without troublesome constituents, and that is compatible with commercial flat glass manufacturing techniques. For privacy glazing, it would be particularly desirable for the glass to have very low infrared transmittance, which in turn would yield low total solar energy transmittance.

It is the object of the present invention to provide a glass which meets these requirements.

The object is solved by a neutral gray colored glass composition having a base glass portion comprising:

| | |
|---|---|
| SiO₂ | 66-75 percent by weight |
| Na₂O | 10-20 percent by weight |
| CaO | 5-15 percent by weight |
| MgO | 0- 5 percent by weight |
| Al₂O₃ | 0- 5 percent by weight |
| K₂O | 0- 5 percent by weight |

and a colorant portion consisting essentially of:

| | |
|---|---|
| Fe₂O₃ (total iron) | greater than 1.00 and up 1.3 % by weight |
| FeO | at least 0.35 % by weight |
| Se | 0.002 up to 0.005 % by weight |
| CoO | 0.01-0.02 % by weight, |

the glass having a redox ratio of 0.3 to 0.5 obtained by controlling the process conditions during the glassmaking process during melting so that the conditions are relatively reducing and the glass having a luminous transmittance of no more than 32 percent, and a total solar infrared transmittance of less than 13 percent at a thickness of 3.9 millimeters.
This object is also attained by an article of manufacture comprising neutral gray colored a glass sheet having a base glass portion comprising:

| | |
|---|---|
| SiO₂ | 66-75 percent by weight |
| Na₂O | 10-20 " |
| CaO | 5-15 " |
| MgO | 0- 5 " |
| Al₂O₃ | 0- 5 " |
| K₂O | 0- 5 " |

and a colorant portion consisting essentially of:

| | |
|---|---|
| Fe₂O₃ (total iron) greater than | 1.00 and up 1.3 % by weight |
| FeO | at least 0.35 % by weight |
| Se | 0.002 up to but less than 0.005 % by weight |
| CoO | 0.01-0.02 % by weight, |

the glass having a redox ratio of 0.3 to 0.5 obtained by controlling the process conditions during the glassmaking process during melting so that the conditions are relatively reducing and the glass having a luminous transmittance of no more than 32 percent, and a total solar infrared transmittance of less than 13 percent at a thickness of 3.9 millimeters.

The present invention is a glass composition having a neutral dark gray color, relatively low luminous (visible) transmittance, and exceptionally low infrared and total solar energy transmittances. The glass of the present invention has a standard soda-lime-silica flat glass base composition and avoids constituents that may cause difficulty in manufacturing or in subsequent use of the product such as nickel, chromium, manganese, and titanium.

At a thickness of 3.9 millimeters the glass of the present invention exhibits luminous transmittance (C.I.E. illuminant C) less than 32 percent, preferably less than 30 percent, total solar infrared transmittance less than 13 percent, most preferably less than 10 percent, and total solar energy transmittance of less than 20%. Although not an essential requirement of the invention, the preferred embodiments exhibit total solar ultraviolet transmittance less than 20%. The FeO content of the glass may be at least 0.35 weight percent, and even greater than 0.35 weight percent, to yield infrared transmittances less than 13 percent or less than 10 percent, respectively, in cases where even greater reduction of solar radiation transmittance is desired.

Neutral gray coloration is marked by low excitation purity. The glass of the present invention exhibits exitation purity less than 5 percent. The dominant wavelength may vary somewhat in accordance with particular color preferences. Therefore, a particular dominant wavelength range is not an essential characteristic of the present invention, but it is considered a preference that the color of the glass of the present invention is blue-gray (as opposed to a green-gray) for the sake of greater compatibility with surrounding colors. The blue-gray color is characterized by dominant wavelengths in the range of 485 to 510 nanometers, preferably 490 to 495 nanometers.

The base glass of the present invention, that is, the major constituents of the glass without colorants, is preferably commercial soda-lime-silica glass characterized as follows:

| | Weight % |
|---|---|
| SiO₂ | 66-75 |
| Na₂O | 10-20 |
| CaO | 5-15 |
| MgO | 0-5 |
| Al₂O₃ | 0-5 |
| K₂O | 0-3 |
| BaO | 0-1 |

Melting and refining aids such as SO₃, fluorine, chlorine, and lithium compounds are sometimes used, and small amounts may be detected in this type of glass. To this base glass are added the coloring constituents of the present invention set forth above. The glass is essentially free of nickel; that is, no deliberate addition of nickel or nickel compounds is made, although the possibility of traces of nickel due to contamination may not always be avoided. Likewise, the glass is essentially free of colorants other than iron, cobalt, and selenium, and specifically it is essentially free of chromium, titanium, uranium, and manganese other than any trace amounts that may be present as impurities. Accordingly, the glass of the present invention may be melted and refined in a continuous, large-scale, commercial melting furnace and formed into flat glass sheets of varying thicknesses by the float method in which the molten glass is supported on a pool of molten metal, usually tin, as it assumes a ribbon shape and is cooled.

The total amount of iron present in the glass is expressed herein in terms of Fe₂O₃ in accordance with standard analytical practice, but that does not imply that all of the iron is actually in the form of Fe₂O₃. Likewise, the amount of iron in the ferrous state is reported as FeO, even though it may not actually be present in the glass as FeO. The proportion of the total iron in the ferrous state is used as a measure of the redox state of the glass and is expressed as the ratio FeO/Fe₂O₃,which is the weight percent of iron in the ferrous state (expressed as FeO). divided by the weight percent of total iron (expressed as Fe₂O₃). Significant characteristics of the glass of the present invention are relatively high total iron concentration (above 1.0 weight percent) and FeO concentrations in the glass of least 0.35 weight percent. High total iron reduces luminous transmittance, and high ferrous iron is particularly helpful in reducing infrared transmittance. Melting glass with large amounts of iron is difficult due to poor radiant heat transfer. Therefore, total iron is limited in the present invention to no more than 1.3 weight percent.

To avoid requiring unduly large amounts of total iron to meet the objectives of the present invention it is useful to enhance the proportion of iron in the ferrous state. Attaining the ferrous iron levels of the present invention requires controlling the redox conditions during melting so that conditions are relatively reducing. The redox ratio for the glass of the present invention may be maintained at 0.3 to 0.4. A redox of 0.5 can be attained by the process disclosed herein, but the use of higher redox ratios is preferably avoided to prevent excessive volatilization of selenium during melting. Additionally, redox ratios above about 0.65 can result in unduly large amounts of amber coloration due to ferric sulfide formation if sulfur is present in the glass. Redox control is achieved by means of controlling process conditions during the glassmaking process as described herein.

The selenium colorant contributes a pink color to the glass as well as a brown color when complexed with iron to form iron selenide (FeSe), cobalt produces a blue color, and iron contributes green and blue in varying proportions depending upon the oxidation state. Iron in the ferric state (Fe₂O₃) yields a yellow-green color, and iron in the ferrous state (FeO) produces a blue color in transmittance. Relatively high concentrations of CoO in this glass help to produce low luminous transmittance. Selenium concentration is also relatively high and varies proportionally to the total of CoO and FeO concentrations in order to maintain a neutral color.

Inclusion of nickel has heretofore been considered essential for producing a neutral gray colored glass of this type because of its particular absorption spectrum. The absence of nickel and its absorption characteristics are accommodated in the present invention without addition of extraneous colorants by the combination of relatively high selenium and cobalt concentrations and low transmittance produced by relatively high iron concentrations. The effect is enhanced by the presence of substantial amounts of iron in the ferrous state which is believed to yield formation of ferrous selenide coloration sites in the glass.

Providing the reducing conditions during melting that are required for this invention is difficult with a conventional overhead fired, tank-type melting furnace, so the type of glass melting and refining operation disclosed in U S -A- 4,792,536 (Pecoraro et al.) is preferred, although not essential. This and other types of melting arrangements that may be preferred are characterized by separate stages whereby more flexibility in controlling redox conditions is provided. The overall melting process of the preferred embodiment disclosed in that patent consists of three stages: a liquefaction stage, a dissolving stage, and a vacuum refining stage. Various arrangements could be employed to initiate the melting in the liquefaction stage, but a highly effective arrangement for isolating this stage of the process and carrying it out economically is that disclosed in U S -A- 4,381,934. The basic structure of the liquefaction vessel is a drum which may be fabricated of steel and has & generally cylindrical sidewall portion, a generally open top, and a bottom portion that is closed except for a drain outlet. The drum is mounted for rotation about a substantially vertical axis. A substantially enclosed cavity is formed within the drum by means of a lid structure.

Heat for liquefying the batch material may be provided by one or more burners extending through the lid. Preferably, a plurality of burners are arranged around the perimeter of the lid so as to direct their flames toward a wide area of the material within the drum. The burners are preferably water cooled to protect them from the harsh environment within the vessel.

Batch materials, preferably in a pulverulent state, may be fed into the cavity of the liquefying vessel by means of a chute. A layer of the batch material is retained on the interior walls of the drum aided by the rotation of the drum and serves as insulating lining. As batch material on the surface of the lining is exposed to the heat within the cavity, liquefied material flows down the sloped lining to a central drain opening at the bottom of the vessel. A stream of liquefied material falls freely from the liquefaction vessel through an opening leading to the second stage.

In order to provide reducing conditions for the purposes of the present invention the burner or burners in the liquefying stage may be operated with an excess amount of fuel relative to the amount of oxygen being supplied to each burner. For example, a ratio of 1.9 parts by volume oxygen to one part by volume natural gas has been found satisfactory for effecting the desired reduction levels in the glass. Alternatively, reducing conditions may be enhanced in the liquefaction stage by including a reducing agent such as coal in the batch mixture being fed to that stage, although this approach is usually not necessary for the present invention.

The second stage of the specific embodiment being described may be termed the dissolving vessel because one of its functions is to complete the dissolution of any unmelted grains of batch material remaining in the liquefied stream leaving the liquefaction vessel. The liquefied material at that point is typically only partially melted, including unmelted sand grains and a substantial gaseous phase. In a typical soda-lime-silica melting process using carbonate batch materials, the gaseous phase is chiefly comprised of carbon oxides. Nitrogen may also be present from entrapped air.

The dissolving vessel serves the function of completing the dissolution of unmelted particles in the liquefied material coming from the first stage by providing residence time at a location isolated from the downstream refining stage. Soda-lime-silica glass batch typically liquefies at a temperature of about 1200°C (2200°F) and enters the dissolving vessel at a temperature of about 1200°C (2200° F) to about 1320°C (2400°F), at which temperature residual unmelted particles usually become dissolved when provided with sufficient residence time. The dissolving vessel may be in the form of a horizontally elongated refractory basin with the inlet and outlet at opposite ends thereof so as to assure adequate residence time.

Although the addition of substantial thermal energy is not necessary to perform the dissolving step, heating can expedite the process and thus reduce the size of the dissolving vessel. More significantly, however, it is preferred to heat the material in the dissolving stage so as to raise its temperature in preparation for the refining stage to follow. Maximizing the temperature for refining is advantageous for the sake of reducing glass viscosity and increasing vapor pressure of included gases. Typically a temperature of about 1520 °C (2800 °F) is considered desirable for refining soda-lime-silica glass, but when vacuum is employed to assist refining, lower peak refining temperatures may be used without sacrificing product quality. The amount by which temperatures can be reduced depends upon the degree of vacuum. Therefore, when refining is to be performed under vacuum in accordance with the preferred embodiment, the glass temperature need be raised to no more than 1480°C (2700°F), for example, and optionally no more than 1430°C (2600°F) prior to refining. When the lower range of pressures disclosed herein are used, the temperature in the refining vessel need be no higher than 1370 °C (2500 °F) in some cases. Peak temperature reductions on this order result in significantly longer life for refractory vessels as well as energy savings. The liquefied material entering the dissolving vessel need be heated only moderately to prepare the molten material for refining. Combustion heat sources may be used in the dissolving stage, but it has been found that this stage lends itself well to electric heating, whereby a plurality of electrodes may be provided. Heat is generated by the resistance of the melt itself to electric current passing between electrodes in the technique conventionally employed to electrically melt glass. The electrodes may be carbon or molybdenum of a type well known to those of skill in the art.

The refining stage preferably consists of a vertically upright vessel that may be generally cylindrical in configuration having an interior ceramic refractory lining shrouded in a gas-tight, water-cooled casing. The structure and process of the preferred vacuum refining stage are those described in U S 4,738,938 (Kunkle et al.). A valve fitted to an inlet tube may be used to control the rate at which the molten material enters the vacuum refining vessel. As the molten material passes through the tube and encounters the reduced pressure within the refining vessel, gases included in the melt expand in volume, creating a foam. As foam collapses it is incorporated into the liquid body held in the refining vessel. Distributing the molten material as thin membranes of a foam greatly increases the surface area exposed to the reduced pressure. Therefore, maximizing the foaming effect is preferred. It is also preferred that the foam be exposed to the lowest pressures in the system, which are encountered at the top of the vessel in the headspace above the liquid, and therefore exposure is improved by permitting newly introduced, foamed material to fall through the head space onto the top of the foam layer. Refined molten material may be drained from the bottom of the refining vessel by way of a drain tube of a refractory metal such as platinum. The benefits of vacuum on the refining process are attained by degrees; the lower the pressure, the greater the benefit. Small reductions in pressure below atmospheric may yield measurable improvements, but to economically justify the vacuum chamber, the use of substantially reduced pressures are preferred. Thus, a pressure of no more than one-half atmosphere is preferred for the appreciable refining improvements imparted to soda-lime-silica flat glass. Significantly greater removal of gases is achieved at pressures of one-third atmosphere or less. More specifically, a refining pressure below 13332 Pa (100 torr), for example 2666 (20) to 6666 Pa (50 torr), is preferred to yield commercial float glass quality of about one seed per 1,000-10,000 cubic centimeters. Seeds less than 0.01 millimeter in diameter are considered imperceptible and are not included in the seed counts.

Typically, flat glass batch includes sodium sulfate as a melting and refining aid in the amounts of about 5 to 15 parts by weight per 1000 parts by weight of the silica source material (sand), with about 10 parts by weight considered desirable to assure adequate refining. When operating in accordance with the preferred embodiment, however, it has been found preferable to restrict the sodium sulfate to two parts by weight, and yet it has been found that refining is not detrimentally affected. Most preferably, the sodium sulfate is utilized at no more than one part per 1000 parts sand, with one-half part being a particularly advantageous example. These weight ratios have been given for sodium sulfate, but it should be apparent that they can be converted to other sulfur sources by molecular weight ratios. Complete elimination of refining aids is feasible with the present invention, although trace amounts of sulfur are typically present in other batch materials and colorants so that small amounts of sulfur may be present even if no deliberate inclusion of sulfur is made in the batch. Moreover, the vacuum treatment has been found to reduce the concentration of volatile gaseous components, particularly the refining aids such as. sulfur, to levels lower than the equilibrium levels attained with conventional processes. Soda-lime-silica glass products, particularly flat glass products, that are mass-produced by conventional continuous melting processes are characterized by significant amounts of residual refining aids. In such products, the residual sulfur content (expressed as SO₃) is typically on the order of 0.2% by weight and seldom less than 0.1%. Even when no deliberate addition of sulfur refining aid is made to the batch, at least 0.02% SO₃ is usually detected in a soda-lime-silica glass made in a conventional continuous melter. In distinction thereto, soda-lime-silica glass in accordance with the present invention can be produced continuously by the preferred embodiment disclosed herein with less than 0.02% residual SO₃, even when relatively small amounts of sulfur refining aid are being included in the batch as described above, and less than 0.01% SO₃ when no deliberate inclusion of sulfur is being made. At the lowest pressures, with no deliberate sulfur addition, SO₃ contents less than 0.005% are attainable. Although low levels of SO₃ are not essential for the present invention, low concentrations of SO₃ are an advantage under the most reduced redox conditions for the sake of avoiding formation of substantial amounts of ferric sulfide complex, which contributes an amber coloration to the glass. Traces of amber coloration may be tolerable in some examples of the present invention, but in general it is undesirable because it detracts from the purity of the desired color.

In the preferred arrangement for producing the glass of the present invention, a stirring arrangement may be employed to homogenize the glass after it has been refined in order to produce glass of the highest optical quality. A particular embodiment may include a stirring chamber below the refining vessel within which a stream of glass is received from the refining vessel. The glass is preferably above 1200°C (2200°F) during stirring. The stirring arrangement is not limited to any particular structure of stirrer, any of the various mechanical devices that have been proposed for stirring molten glass in the prior art being usable. Some arrangements may be more effective than others in homogenizing the glass, but the number of stirrers and their speed of rotation can be selected to compensate for variations in efficiency. A particular example of a suitable stirrer structure is that disclosed in U S -A- 4,493,557 (Nayak et al.). An optional feature, preferred for making higher quality flat glass, is that the stirring chamber may be integrated with a float forming chamber, whereby the glass in the stirring chamber rests on a layer of molten metal. The molten metal may be continuous with the molten metal constituting the support in the forming chamber, and is usually comprised essentiallv of tin.

Although not limited thereto, the glass of the present invention will most commonly be embodied by a flat sheet suitable for glazing windows of buildings or vehicles. Usually the sheet form will be made by the float process. A sheet of glass that has been formed by the float process (i.e., floated on molten tin) is characterized by measurable amounts of tin oxide that have migrated into surface portions of the glass on at least one side. Typically a piece of float glass has an SnO₂ concentration of at least 0.05% by weight in the first few microns below the surface that was in contact with the tin.

The radiation transmittance data herein are based on the following wavelength ranges:

| | |
|---|---|
| Ultraviolet (TSUV) | 300- 390 nanometers |
| Visible (LT_{c}) | 400- 770 nanometers |
| Infrared (TSIR) | 800-2100 nanometers |

Luminous transmittance (LT_{A} or LT_{C}) is measured using C.I.E. standard illuminant A or C, respectively. Total solar energy transmittance (TSET) is a weighted cumulative measure of the combined values of luminous transmittance, TSIR (total solar infrared transmittance), and TSUV (total solar ultraviolet transmittance).

The following examples embody the principles of the present invention to varying degrees. The chief variable is the portion of the iron in the ferrous state, and the effect of that variable on the infrared and ultraviolet transmittances can be seen in the examples, with Example 1 having a higher infrared transmittance than desired. Not all of the examples are as blue-gray in color as would be desired as indicated by the dominant wavelengths, nor as neutral appearance as would be desired as indicated by elevated exitation purities. Examples 1 to 5 are comparative examples. Example 8 is considered to be a preferred embodiment for at least one particular application of the present invention. Fe₂O₃ in the following table is total iron, including that present as FeO.

| | 1* | 2* | 3* | 4* | 5* | 6 | 7* | 8* |
|---|---|---|---|---|---|---|---|---|
| Fe₂O₃ | 1.66 | 1.686 | 1.54 | 1.423 | 1.31 | 1.11 | 1.14 | 1.12 |
| FeO % | 0.23 | 0.328 | 0.242 | 0.264 | 0.418 | 0.374 | 0.446 | 0.388 |
| CoO ppm | 176 | 185 | 173 | 174 | 129 | 117 | 107 | 114 |
| Se ppm | 46 | 30 | 40 | 30 | 27 | 23 | 13 | 19 |
| Redox | 0.139 | 0.194 | 0.157 | .186 | 0.319 | 0.34 | 0.41 | 0.35 |
| LT_{A} | 14.8 | 13.87 | 15.62 | 18.49 | 17.52 | 22.72 | 26.87 | 24.07 |
| LT_{C} | 14.46 | 13.96 | 15.4 | 18.72 | 17.62 | 22.88 | 28.05 | 24.51 |
| TSIR | 19.29 | 8.96 | 16.26 | 14.11 | 6.21 | 8.70 | 5.05 | 7.99 |
| TSUV | 2.84 | 4.55 | 4.67 | 8.07 | 8.43 | 13.21 | 18.69 | 14.30 |
| TSET | 17.8 | 11.93 | 16.73 | 17.29 | 11.77 | 15.80 | 15.84 | 16.06 |
| DW nm | 576.76 | 552.59 | 576.12 | 488.29 | 556.04 | 530.32 | 485.95 | 491.56 |
| Pe % | 14.49 | 2.93 | 8.93 | 3.25 | 3.51 | 1.24 | 11.8 | 3.88 |

| | | | | | | | | |
|---|---|---|---|---|---|---|---|---|
| * not an example of the present invention | | | | | | | | |

Only the colorant portions of the examples are reported in the table of examples. The base glass composition for Example 8, which is essentially the same for all of the examples, was as follows:

| | |
|---|---|
| SiO₂ | 72.3% by weight |
| Na₂O | 13.65 |
| CaO | 8.78 |
| MgO | 3.85 |
| Al₂O₃ | 0.14 |

The batch mixture for Example 8*, which is essentially the same for all of the examples except for the colorants, was:

| **Constituent** | **Parts by Weight** |
|---|---|
| Sand | 1000 |
| Soda Ash | 323 |
| Limestone | 84 |
| Dolomite | 244 |
| Rouge | 16.2 |
| Co₃O₄ | 0.217 |
| Se (metallic) | 0.131 |
| Graphite | 0.95 |

Glass made by the float process typically ranges from about 2 millimeters to 10 millimeters in thickness. For the vehicle glazing applications of the invention, it is preferred that the transmittance properties be attained within the thickness range of 3 to 6 millimeters.

Another characteristic of most mass-produced glass is the presence of traces of melting and refining aids such as sulfur, analyzed in the glass as SO₃, or fluorine or chlorine. Small amounts of these melting and refining aids, usually less than 0.3% by weight, may be present in the glass compositions of the present invention without effect on the properties. Much lower concentrations are present in the glass product if the preferred process disclosed herein is employed to produce the glass, usually less than 0.01 percent by weight SO₃.

The product glass of the present invention is advantageously provided with a reflective coating to enhance the privacy characteristics. For example, luminous transmittance can be lowered to about 20 percent by applying a reflective coating to one surface of a sheet of the glass. Any coating that reduces transmittance and is suitable for application onto glass surfaces may be used. Examples of suitable coatings include titanium dioxide and a mixture of the oxides of cobalt, iron, and chromium, both produced pyrolytically from acetylacetonates of the metals in accordance with the process disclosed in U S -A-3,660,061 (Donley et al.). A reflective coating of this type not only reduces luminous transmittance, but also substantially reduces ultraviolet transmittance. Since the glass substrate of the present invention is particularly adapted to reduce infrared transmittance, the combination of the glass with a coating that reduces luminous and/or ultraviolet transmittance yields a product that is particularly capable of reduced total solar energy transmittance. Because of the low transmittance provided by the glass composition of the present invention, smaller coating thicknesses are needed compared to using a more conventional tinted glass as the substrate. For example, a coating of TiO₂ from TiO(C₅H₇O₂)₂ may be sufficient at a thickness of 27 nm (270 angstroms). In another example, a mixed metal oxide (spinel) coating of 70 weight percent cobalt, 17 weight percent iron, and 13 weight percent chromium (percentages based on metallic state) produced from a solution of 63 weight percent Co(C₅H₇O₂)₃, 16 weight percent Fe(C₅H₇O₂)₃, and 21 weight percent Cr(C₅H₇O₂)₃ was provided with a thickness of 35 nm (350 angstroms).

Another advantage of the glass of the present invention as a substrate for a coated product is that the glass absorbs more of the radiation reflected from the coating. Also, the smaller thickness of coating permitted by the low transmittance substrate results in less reflectance from the coating itself. Reflectance no greater than 20 percent from the coated side is considered a maximum for purposes of this aspect of the invention. As a result, particularly when the coated side of the glass is placed on the inside of a vehicle, there is less of a mirror-like appearance from the outside, which is considered more aesthetically pleasing. The combination of the glass of the present invention and the coating examples set forth above can yield reflectance from the uncoated side of the glass lower than ten percent, and as low as six percent or less in preferred examples.

## Claims (Claims for the following Contracting State(s): CH,Li,DE,FR,GB,It,SE)

1. A neutral gray colored glass composition having a base glass portion comprising:
| | |
|---|---|
| SiO₂ | 66-75 percent by weight |
| Na₂O | 10-20 " |
| CaO | 5-15 " |
| MgO | 0- 5 " |
| Al₂O₃ | 0- 5 " |
| K₂O | 0- 5 " |
and a colorant portion consisting essentially of:
| | |
|---|---|
| Fe₂O₃ (total iron) | greater than 1.00 and up to 1.3 % by weight |
| FeO | at least 0.35 % by weight |
| Se | 0.002 up to 0.005 % by weight |
| Co0 | 0.01-0.02 % by weight |
the glass having a redox ratio of 0.3 to 0.5 obtained by controlling the process conditions during the glassmaking process during melting so that the conditions are relatively reducing and the glass having a luminous transmittance of no more than 32 percent, and a total solar infrared transmittance of less than 13 percent at a thickness of 3.9 millimeters.

2. The composition of claim 1 wherein the colorant portion is selected so as to yield total solar infrared transmittance less than 10 percent at 3.9 millimeters thickness.

3. The composition of claim 1 wherein the color of the glass is **characterized by** dominant wavelengths in the range of 485-510 nanometers.

4. The composition of claim 3 wherein the color of the glass is **characterized by** an excitation purity of less than 5 percent.

5. An article of manufacture comprising neutral gray colored a glass sheet having a base glass portion comprising:
| | |
|---|---|
| SiO₂ | 66-75 percent by weight |
| Na₂O | 10-20 " |
| CaO | 5-15 " |
| MgO | 0- 5 " |
| Al₂O₃ | 0- 5 " |
| K₂O | 0- 5 " |
and a colorant portion consisting essentially of:
| | |
|---|---|
| Fe₂O₃ (total iron) greater than | 1.00 and up to 1.3 % by weight |
| FeO | at least 0.35 % by weight |
| Se | 0.002 up to but less than 0.005 % by weight |
| Co0 | 0.01-0.02 % by weight |
the glass having a redox ratio of 0.3 to 0.5 obtained by controlling the process conditions during the glassmaking process during melting so that the conditions are relatively reducing and the glass having a luminous transmittance of no more than 32 percent, and a total solar infrared transmittance of less than 13 percent at a thickness of 3.9 millimeters.

6. The article of claim 5 wherein the sheet has a thickness of 2-10 millimeters.

7. The article of claim 5 wherein the sheet has a thickness of 3-6 millimeters.

8. The article of claim 5 wherein a surface portion of the sheet includes at least 0.05 percent by weight SnO₂.

9. The article of claim 7 wherein the luminous transmittance is less than 30 percent at a thickness of 3.9 millimeters.

10. The article of claim 5 wherein the colorant portion is selected so as to yield total solar infrared transmittance less than 10 percent at 3.9 millimeters thickness.

11. The article of claim 5 further including a reflective coating on at least one surface of the glass sheet.

12. The article of claim 11 wherein the coating has a reflectance from the coated surface of no more than 20 percent.

13. The article of claim 12 wherein the reflectance from the uncoated surface is no greater than 10 percent.

14. The article of claim 11 wherein the coating consists essentially of titanium dioxide.

15. The article of claim 11 wherein the coating consists essentially of mixed oxides of cobalt, iron, and chromium.

16. The article of claim 5 wherein the color of the glass is **characterized by** dominant wavelengths in the range of 485-510 nanometers.

17. The article of claim 16 wherein the color of the glass is **characterized by** an excitation purity of less than 5 percent.

## Claims (Claims for the following Contracting State(s): ES)

1. A process for preparing a neutral gray colored glass composition having a base glass portion comprising:
| | |
|---|---|
| SiO₂ | 66-75 percent by weight |
| Na₂O | 10-20 " |
| CaO | 5-15 " |
| MgO | 0- 5 " |
| Al₂O₃ | 0 - 5 " |
| K₂O | 0- 5 " |
and a colorant portion consisting essentially of:
| | |
|---|---|
| Fe₂O₃ (total iron) | greater than 1.00 and up to 1.3 % by weight |
| FeO | at least 0.35 % by weight |
| Se | 0.002 up to 0.005 % by weight |
| CoO | 0.01-0.02 % by weight |
the glass having a redox ratio of 0.3 to 0.5 obtained by controlling the process conditions during the glassmaking process during melting so that the conditions are relatively reducing and the glass having a luminous transmittance of no more than 32 percent, and a total solar infrared transmittance of less than 13 percent at a thickness of 3.9 millimeters.

2. The process of claim 1 wherein the colorant portion is selected so as to yield total solar infrared transmittance less than 10 percent at 3.9 millimeters thickness.

3. The process of claim 1 wherein the color of the glass is **characterized by** dominant wavelengths in the range of 485-510 nanometers.

4. The process of claim 3 wherein the color of the glass is **characterized by** an excitation purity of less than 5 percent.

5. An article of manufacture comprising a neutral gray colored a glass sheet having a base glass portion comprising:
| | |
|---|---|
| SiO₂ | 66-75 percent by weight |
| Na₂O | 10-20 " |
| CaO | 5-15 " |
| MgO | 0- 5 " |
| Al₂O₃ | 0- 5 " |
| K₂O | 0- 5 " |
and a colorant portion consisting essentially of:
| | |
|---|---|
| Fe₂O₃ (total iron) | greater than 1.00 and up to 1.3 % by weight |
| FeO | at least 0.35 % by weight |
| Se | 0.002 up to but less than 0.005 % by weight |
| CoO | 0.01-0.02 % by weight |
the glass having a redox ratio of 0.3 to 0.5 obtained by controlling the process conditions during the glassmaking process during melting so that the conditions are relatively reducing and the glass having a luminous transmittance of no more than 32 percent, and a total solar infrared transmittance of less than 13 percent at a thickness of 3.9 millimeters.

6. The article of claim 5 wherein the sheet has a thickness of 2-10 millimeters.

7. The article of claim 5 wherein the sheet has a thickness of 3-6 millimeters.

8. The article of claim 5 wherein a surface portion of the sheet includes at least 0.05 percent by weight SnO₂.

9. The article of claim 7 wherein the luminous transmittance is less than 30 percent at a thickness of 3.9 millimeters.

10. The article of claim 5 wherein the colorant portion is selected so as to yield total solar infrared transmittance less than 10 percent at 3.9 millimeters thickness.

11. The article of claim 5 further including a reflective coating on at least one surface of the glass sheet.

12. The article of claim 11 wherein the coating has a reflectance from the coated surface of no more than 20 percent.

13. The article of claim 12 wherein the reflectance from the uncoated surface is no greater than 10 percent.

14. The article of claim 11 wherein the coating consists essentially of titanium dioxide.

15. The article of claim 11 wherein the coating consists essentially of mixed oxides of cobalt, iron, and chromium.

16. The article of claim 5 wherein the color of the glass is **characterized by** dominant wavelengths in the range of 485-510 nanometers.

17. The article of claim 16 wherein the color of the glass is **characterized by** an excitation purity of less than 5 percent.

## Patentansprüche (Patentansprüche für folgende(n) Vertragsstaat(en): CH, LI, DE, FR, GB, IT, SE)

1. Neutral graugefärbte Glaszusammensetzung mit einem Basisglasanteil bestehend aus:
| | |
|---|---|
| SiO₂ | 66-75 Gew.-% |
| Na₂O | 10-20 Gew.-% |
| CaO | 5-15 Gew.-% |
| MgO | 0- 5 Gew.-% |
| Al₂O₃ | 0- 5 Gew.-% |
| K₂O | 0- 5 Gew.-% |
und einem Farbstoffanteil, im wesentlichen bestehend aus:
| | |
|---|---|
| Fe₂O₃ (Gesamteisengehalt) | größer als 1,00 und bis zu 1,3 Gew.-% |
| FeO | mindestens 0,35 Gew.-% |
| Se | 0,002 bis zu 0,005 Gew.-% |
| CoO | 0,01-0,02 Gew.-%, |
wobei das Glas ein Redoxverhältnis von 0,3 bis 0,5 aufweist, erhalten durch Steuerung der Verfahrensbedingungen während der Glasherstellung während des Schmelzens, so dass die Bedingungen relativ reduzierend sind und das Glas eine Lichtdurchlässigkeit von nicht mehr als 32% und eine Gesamtdurchlässigkeit für Sonneninfrarotstrahlen von weniger als 13% bei einer Dicke von 3,9 mm hat.

2. Zusammensetzung nach Anspruch 1, bei dem der Farbstoffanteil so ausgewählt wird, dass die Gesamtdurchlässigkeit für Sonneninfrarotstrahlen weniger als 10% bei einer Dicke von 3,9 mm beträgt.

3. Zusammensetzung nach Anspruch 1, bei dem die Farbe des Glases durch farbtongleiche Wellenlängen im Bereich von 485-510 nm **gekennzeichnet** ist.

4. Zusammensetzung nach Anspruch 3, bei dem die Farbe des Glases durch eine Anregungsreinheit von weniger als 5% **gekennzeichnet** ist.

5. Fabrikationserzeugnis, das eine neutral graugefärbte Glasscheibe ist mit einem Basisglasanteil bestehend aus:
| | |
|---|---|
| SiO₂ | 66-75 Gew.-% |
| Na₂O | 10-20 Gew.-% |
| CaO | 5-15 Gew.-% |
| MgO | 0- 5 Gew.-% |
| Al₂O₃ | 0- 5 Gew.-% |
| K₂O | 0- 5 Gew.-% |
und einem Farbstoffanteil, im wesentlichen bestehend aus:
| | |
|---|---|
| Fe₂O₃ (Gesamteisengehalt) | größer als 1,00 und bis zu 1,3 Gew.-% |
| FeO | mindestens 0,35 Gew.-% |
| Se | 0,002 bis zu weniger als 0,005 Gew.-% |
| CoO | 0.01-0.02 Gew.-%, |
wobei das Glas ein Redoxverhältnis von 0,3 bis 0,5 aufweist, erhalten durch Steuerung der Verfahrensbedingungen während der Glasherstellung während des Schmelzens, so dass die Bedingungen relativ reduzierend sind und das Glas eine Lichtdurchlässigkeit von nicht mehr als 32% und eine Gesamtdurchlässigkeit für Sonneninfrarotstrahlen von weniger als 13% bei einer Dicke von 3,9 mm hat.

6. Erzeugnis nach Anspruch 5, bei dem die Scheibe eine Dicke von 2-10 mm hat.

7. Erzeugnis nach Anspruch 5, bei dem die Scheibe eine Dicke von 3-6 mm hat.

8. Erzeugnis nach Anspruch 5, bei dem ein Oberflächenanteil der Scheibe mindestens 0,05 Gew.-% SnO₂ enthält.

9. Erzeugnis nach Anspruch 7, bei dem die Lichtdurchlässigkeit weniger als 30% bei einer Dicke von 3,9 mm beträgt.

10. Erzeugnis nach Anspruch 5, bei dem der Farbstoffanteil so ausgewählt wird, dass die Gesamtdurchlässigkeit für Sonneninfrarotstrahlen weniger als 10% bei einer Dicke von 3,9 mm beträgt.

11. Erzeugnis nach Anspruch 5, das außerdem eine reflektierende Beschichtung auf mindestens einer Oberfläche der Glasscheibe aufweist.

12. Erzeugnis nach Anspruch 11, bei dem die Beschichtung einen Reflexionsfaktor der beschichteten Oberfläche von nicht mehr als 20% aufweist.

13. Erzeugnis nach Anspruch 12, bei dem der Reflexionsfaktor der unbeschichteten Oberfläche nicht größer als 10% ist.

14. Erzeugnis nach Anspruch 11, bei dem die Beschichtung im wesentlichen aus Titandioxid besteht.

15. Erzeugnis nach Anspruch 11, bei dem die Beschichtung im wesentlichen aus gemischten Oxiden von Kobalt, Eisen und Chrom besteht.

16. Erzeugnis nach Anspruch 5, bei dem die Farbe des Glases durch farbtongleiche Wellenlängen im Bereich von 485-510 nm **gekennzeichnet** ist.

17. Erzeugnis nach Anspruch 16, bei dem die Farbe des Glases durch eine Anregungsreinheit von weniger als 5% **gekennzeichnet** ist.

## Patentansprüche (Patentansprüche für folgende(n) Vertragsstaat(en): ES)

1. Verfahren zum Herstellen einer neutral graugefärbten Glaszusammensetzung mit einem Basisglasanteil bestehend aus:
| | |
|---|---|
| SiO₂ | 66-75 Gew.-% |
| Na₂O | 10-20 Gew.-% |
| CaO | 5-15 Gew.-% |
| MgO | 0- 5 Gew.-% |
| Al₂O₃ | 0- 5 Gew.-% |
| K₂O | 0 - 5 Gew.-% |
und einem Farbstoffanteil, im wesentlichen bestehend aus:
| | |
|---|---|
| Fe₂O₃ (Gesamteisengehalt) | größer als 1,00 und bis zu 1,3 Gew.-% |
| FeO | mindestens 0,35 Gew.-% |
| Se | 0,002 bis zu 0,005 Gew.-% |
| CoO | 0,01-0,02 Gew.-%, |
wobei das Glas ein Redoxverhältnis von 0,3 bis 0,5 aufweist, erhalten durch Steuerung der Verfahrensbedingungen während der Glasherstellung während des Schmelzens, so dass die Bedingungen relativ reduzierend sind und das Glas eine Lichtdurchlässigkeit von nicht mehr als 32% und eine Gesamtdurchlässigkeit für Sonneninfrarotstrahlen von weniger als 13% bei einer Dicke von 3,9 mm hat.

2. Verfahren nach Anspruch 1, bei dem der Farbstoffanteil so ausgewählt wird, dass die Gesamtdurchlässigkeit für Sonneninfrarotstrahlen weniger als 10% bei einer Dicke von 3,9 mm beträgt.

3. Verfahren nach Anspruch 1, bei dem die Farbe des Glases durch farbtongleiche Wellenlängen im Bereich von 485-510 nm **gekennzeichnet** ist.

4. Verfahren nach Anspruch 3, bei dem die Farbe des Glases durch eine Anregungsreinheit von weniger als 5% **gekennzeichnet** ist.

5. Fabrikationserzeugnis, das eine neutral graugefärbte Glasscheibe ist mit einem Basisglasanteil bestehend aus:
| | |
|---|---|
| SiO₂ | 66-75 Gew.-% |
| Na₂O | 10-20 Gew.-% |
| CaO | 5-15 Gew.-% |
| MgO | 0- 5 Gew.-% |
| Al₂O₃ | 0- 5 Gew.-% |
| K₂O | 0- 5 Gew.-% |
und einem Farbstoffanteil, im wesentlichen bestehend aus:
| | |
|---|---|
| Fe₂O₃ (Gesamteisengehalt) | größer als 1,00 und bis zu 1,3 Gew.-% |
| FeO | mindestens 0,35 Gew.-% |
| Se | 0,002 bis zu weniger als 0,005 Gew.-% |
| CoO | 0,01-0,02 Gew.-%, |
wobei das Glas ein Redoxverhältnis von 0,3 bis 0,5 aufweist, erhalten durch Steuerung der Verfahrensbedingungen während der Glasherstellung während des Schmelzens, so dass die Bedingungen relativ reduzierend sind und das Glas eine Lichtdurchlässigkeit von nicht mehr als 32% und eine Gesamtdurchlässigkeit für Sonneninfrarotstrahlen von weniger als 13% bei einer Dicke von 3,9 mm hat.

6. Erzeugnis nach Anspruch 5, bei dem die Scheibe eine Dicke von 2-10 mm hat.

7. Erzeugnis nach Anspruch 5, bei dem die Scheibe eine Dicke von 3-6 mm hat.

8. Erzeugnis nach Anspruch 5, bei dem ein Oberflächenanteil der Scheibe mindestens 0,05 Gew.-% SnO₂ enthält.

9. Erzeugnis nach Anspruch 7, bei dem die Lichtdurchlässigkeit weniger als 30% bei einer Dicke von 3,9 mm beträgt.

10. Erzeugnis nach Anspruch 5, bei dem der Farbstoffanteil so ausgewählt wird, dass die Gesamtdurchlässigkeit für Sonneninfrarotstrahlen weniger als 10% bei einer Dicke von 3,9 mm beträgt.

11. Erzeugnis nach Anspruch 5, das außerdem eine reflektierende Beschichtung auf mindestens einer Oberfläche der Glasscheibe aufweist.

12. Erzeugnis nach Anspruch 11, bei dem die Beschichtung einen Reflexionsfaktor der beschichteten Oberfläche von nicht mehr als 20% aufweist.

13. Erzeugnis nach Anspruch 12, bei dem der Reflexionsfaktor der unbeschichteten Oberfläche nicht größer als 10% ist.

14. Erzeugnis nach Anspruch 11, bei dem die Beschichtung im wesentlichen aus Titandioxid besteht.

15. Erzeugnis nach Anspruch 11, bei dem die Beschichtung im wesentlichen aus gemischten Oxiden von Kobalt, Eisen und Chrom besteht.

16. Erzeugnis nach Anspruch 5, bei dem die Farbe des Glases durch farbtongleiche Wellenlängen im Bereich von 485-510 nm **gekennzeichnet** ist.

17. Erzeugnis nach Anspruch 16, bei dem die Farbe des Glases durch eine Anregungsreinheit von weniger als 5% **gekennzeichnet** ist.

## Revendications (Revendications pour l'(les) Etat(s) contractant(s) suivant(s): CH, LI, DE, FR, GB, IT, SE)

1. Une composition de verre coloré gris neutre ayant une partie de base en verre comprenant:
| | |
|---|---|
| SiO₂ | 66-75 pour cent en poids |
| Na₂O | 10-20 pour cent en poids |
| CaO | 5-15 pour cent en poids |
| MgO | 0- 5 pour cent en poids |
| Al₂O₃ | 0- 5 pour cent en poids |
| K₂O | 0- 5 pour cent en poids |
et une partie colorant consistant essentiellement en:
| | |
|---|---|
| Fe₂O₃ (fer total) | majeur que 1,00 et jusqu'à 1,3 pour cent en poids |
| FeO | au moins 0,35 pour cent en poids |
| Se | de 0,002 à 0,005 pour cent en poids |
| CoO | 0,01-0,02 pour cent en poids |
le verre ayant un rapport d'oxydo-réduction de 0,3 à 0,5, obtenu en contrôlant les conditions du procédé au course du procédé de fabrication du verre pendant la fusion de sorte que les conditions soint relativement réductrices et le verre ayant un facteur de transmission de la lumière n'excédant pas 32 pour cent et un facteur de transmission infrarouge solaire total inférieur à 13 pour cent pour une épaisseur de 3,9 mm.

2. La composition de la revendication 1 dans laquelle la partie colorant est choisie de manière à obtenir un facteur de transmission infrarouge solaire total inférieur à 10 pour cent pour une épaisseur de 3,9 mm.

3. La composition de la revendication 1 dans laquelle la couleur du verre est **caractérisée par** des longueurs d'ondes dominants dans la plage allant de 485-510 nm.

4. La composition de la revendication 3 dans laquelle la couleur du verre est **caractérisée par** une pureté d'excitation inférieur à 5 pour cent.

5. Un article de fabrication comprenant une plaque de verre coloré gris neutre ayant une partie de base en verre comprenant:
| | |
|---|---|
| SiO₂ | 66-75 pour cent en poids |
| Na₂O | 10-20 pour cent en poids |
| CaO | 5-15 pour cent en poids |
| MgO | 0- 5 pour cent en poids |
| Al₂O₃ | 0- 5 pour cent en poids |
| K₂O | 0- 5 pour cent en poids |
et une partie colorant consistant essentiellement en:
| | |
|---|---|
| Fe₂O₃ (fer total) | majeur que 1,00 et jusqu'à 1,3 pour cent en poids |
| FeO | au moins 0,35 pour cent en poids |
| Se | de 0,002 à moins de 0,005 pour cent |
| | en poids |
| CoO | 0,01-0,02 pour cent en poids |
le verre ayant un rapport d'oxydo-réduction de 0,3 à 0,5, obtenu en contrôlant les conditions du procédé au course du procédé de fabrication du verre pendant la fusion de sorte que les conditions soint relativement réductrices et le verre ayant un facteur de transmission de la lumière n'excédant pas 32 pour cent et un facteur de transmission infrarouge solaire total inférieur à 13 pour cent pour une épaisseur de 3,9 mm.

6. L'article de la revendication 5 où la plaque a une épaisseur de 2-10 mm.

7. L'article de la revendication 5 où la plaque a une épaisseur de 3-6 mm.

8. L'article de la revendication 5 où la surface de la plaque comprend au moins 0,05 pour cent en poids de SnO₂.

9. L'article de la revendication 7 ou le facteur de transmission de la lumière est inférieur à 30 pour cent pour une épaisseur de 3,9 mm.

10. L'article de la revendication 5 où la partie colorant est choisie de manière à obtenir un facteur de transmission infrarouge solaire total inférieur à 10 pour cent pour une épaisseur de 3,9 mm.

11. L'article de la revendication 5 comprenant en outre un revêtement réfléchissant sur au moins l'une des surfaces de la plaque de verre.

12. L'article de la revendication 11 dans lequel le revêtement a un facteur de réflexion de la surface couverte n'excédant pas 20 pour cent.

13. L'article de la revendication 12 dans lequel le facteur de réflexion de la surface non couverte n'excède pas 10 pour cent.

14. L'article de la revendication 11 dans lequel le revêtement est essentiellement composé de dioxyde de titane.

15. L'article de la revendication 11 dans lequel le revêtement est essentiellement composé d'un mélange d'oxydes de cobalt, de fer et de chrome.

16. L'article de la revendication 5 dans lequel la couleur du verre est **caractérisée par** des longueurs d'ondes dominants dans la plage allant de 485-510 nm.

17. L'article de la revendication 16 dans lequel la couleur du verre est **caractérisée par** une pureté d'excitation inférieur à 5 pour cent.

## Revendications (Revendications pour l'(les) Etat(s) contractant(s) suivant(s): ES)

1. Un procédé de préparation d'une composition de verre coloré gris neutre avec partie de base en verre comprenant:
| | |
|---|---|
| SiO₂ | 66-75 pour cent en poids |
| Na₂O | 10-20 pour cent en poids |
| CaO | 5-15 pour cent en poids |
| MgO | 0- 5 pour cent en poids |
| Al₂O₃ | 0- 5 pour cent en poids |
| K₂O | 0- 5 pour cent en poids |
et une partie colorant consistant essentiellement en:
| | |
|---|---|
| Fe₂O₃ (fer total) | majeur que 1,00 et jusqu'à 1,3 pour cent en poids |
| FeO | au moins 0,35 pour cent en poids |
| Se | de 0,002 à 0,005 pour cent en poids |
| CoO | 0,01-0,02 pour cent en poids |
le verre ayant un rapport d'oxydo-réduction de 0,3 à 0,5, obtenu en contrôlant les conditions du procédé au course du procédé de fabrication du verre pendant la fusion de sorte que les conditions soint relativement réductrices et le verre ayant un facteur de transmission de la lumière n'excédant pas 32 pour cent et un facteur de transmission infrarouge solaire total inférieur à 13 pour cent pour une épaisseur de 3,9 mm.

2. Le procédé de la revendication 1 dans laquelle la partie colorant est choisie de manière à obtenir un facteur de transmission infrarouge solaire total inférieur à 10 pour cent pour une épaisseur de 3,9 mm.

3. Le procédé de la revendication 1 dans laquelle la couleur du verre est **caractérisée par** des longueurs d'ondes dominants dans la plage allant de 485-510 nm.

4. Le procédé de la revendication 3 dans laquelle la couleur du verre est **caractérisée par** une pureté d'excitation inférieur à 5 pour cent.

5. Un article de fabrication comprenant une plaque de verre coloré gris neutre ayant une partie de base en verre comprenant:
| | |
|---|---|
| SiO₂ | 66-75 pour cent en poids |
| Na₂O | 10-20 pour cent en poids |
| CaO | 5-15 pour cent en poids |
| MgO | 0- 5 pour cent en poids |
| Al₂O₃ | 0- 5 pour cent en poids |
| K₂O | 0- 5 pour cent en poids |
et une partie colorant consistant essentiellement en:
| | |
|---|---|
| Fe₂O₃ (fer total) | majeur que 1,00 et jusqu'à 1,3 pour cent en poids |
| FeO | au moins 0,35 pour cent en poids |
| Se | de 0,002 à moins de 0,005 pour cent en poids |
| CoO | 0,01-0,02 pour cent en poids |
le verre ayant un rapport d'oxydo-réduction de 0,3 à 0,5, obtenu en contrôlant les conditions du procédé au course du procédé de fabrication du verre pendant la fusion de sorte que les conditions soint relativement réductrices et le verre ayant un facteur de transmission de la lumière n'excédant pas 32 pour cent et un facteur de transmission infrarouge solaire total inférieur à 13 pour cent pour une épaisseur de 3,9 mm.

6. L'article de la revendication 5 où la plaque a une épaisseur de 2-10 mm.

7. L'article de la revendication 5 où la plaque a une épaisseur de 3-6 mm.

8. L'article de la revendication 5 où la surface de la plaque comprend au moins 0,05 pour cent en poids de SnO₂.

9. L'article de la revendication 7 ou le facteur de transmission de la lumière est inférieur à 30 pour cent pour une épaisseur de 3,9 mm.

10. L'article de la revendication 5 où la partie colorant est choisie de manière à obtenir un facteur de transmission infrarouge solaire total inférieur à 10 pour cent pour une épaisseur de 3,9 mm.

11. L'article de la revendication 5 comprenant en outre un revêtement réfléchissant sur au moins l'une des surfaces de la plaque de verre.

12. L'article de la revendication 11 dans lequel le revêtement a un facteur de réflexion de la surface couverte n'excédant pas 20 pour cent.

13. L'article de la revendication 12 dans lequel le facteur de réflexion de la surface non couverte n'excède pas 10 pour cent.

14. L'article de la revendication 11 dans lequel le revêtement est essentiellement composé de dioxyde de titane.

15. L'article de la revendication 11 dans lequel le revêtement est essentiellement composé d'un mélange d'oxydes de cobalt, de fer et de chrome.

16. L'article de la revendication 5 dans lequel la couleur du verre est **caractérisée par** des longueurs d'ondes dominants dans la plage allant de 485-510 nm.

17. L'article de la revendication 16 dans lequel la couleur du verre est **caractérisée par** une pureté d'excitation inférieur à 5 pour cent.
